# EUROPEAN PATENT SPECIFICATION

(11) **EP 0 863 304 B1**
(45) Date of publication and mention of the grant of the patent: **03.07.2002**
(21) Application number: 98200629.8
(22) Date of filing: 27.02.1998
(51) Int. Cl.: F02M 37/10, F02M 37/22

(54) **Engine fuel intake and delivery unit, particularly for motor vehicles**
Brennstofffördereinheit insbesondere für Kraftfahrzeuge
Unité d'admission et de refoulement de carburant, notamment pour véhicules automobiles

(30) Priority: 03.03.1997 IT MI970461
(43) Date of publication of application: 09.09.1998
(73) Proprietor: BITRON S.p.A., 10042 Nichelino (Torino) (IT)
(72) Inventor: Burnengo, Paolo, 17020 Orco Feglino (Savona) (IT)
(74) Representative: De Gregori, Antonella

(56) References cited:
- EP-A- 0 634 300
- EP-A- 0 702 142
- WO-A-96/14506
- DE-A- 19 509 143
- US-A- 5 195 494
- US-A- 5 392 750
- US-A- 5 511 957

## Description

This invention relates to an internal combustion engine fuel intake and delivery unit, particularly for motor vehicles.

Engine fuel feed units with a return line are used in carburation systems in order to obtain a fuel flow at the carburettor which well exceeds the rate consumed, to prevent the engine, in the case of sudden flow requirement variations (such as during violent vehicle acceleration), assuming a condition of fuel deficiency with consequent engine malfunction and intrinsic danger. They are also used in fuel injection systems with the aid of a branched pressure regulator normally mounted in the injector offtake line or in its immediate vicinity, because to ensure fuel injection at a constant pressure difference compared with the engine intake manifold one side of the membrane has to be pneumatically connected to the intake manifold by a tube. Moreover the recycling of fuel to the tank helps to maintain a low fuel temperature within the injector offtake line and limit the possibility of vapour formation within the line. In this respect, vapour formation creates hot restart problems for the engine, particularly under certain conditions. A fuel intake and delivery unit for an engine having the features of the preamble of claim 1 is also known from US-A-5,392,750.

However, a negative aspect of this system is an increase in fuel temperature within the tank and hence greater vapour formation inside the tank, making the dimensioning of the filter canister and pollutant emission control more critical.

Installing the pressure regulator just ahead of the injector offtake line partly reduces heating of the fuel in the tank, but does not offer other substantial benefits. The alternative of electronically controlling pump operation has a cost/advantage ratio which in the current state of the art is not yet favourable.

Returnless feed systems do not however have a pressure regulator installed in the injector offtake line or in proximity to the engine, and only that fuel throughput strictly necessary for engine operation flows through the injector offtake line. This results in a higher operating temperature of the injector offtake line (and consequently of the fuel contained in it), hence to limit the problems due to this condition the tendency is to operate the fuel feed circuit at a pressure higher than usual, to increase the temperature at which vapour forms in the system.

Returnless systems of this type have their pressure regulator installed within the tank, to recirculate directly into the tank interior the excess throughput provided by the pump.

This different installation position for the pressure regulator no longer enables the vacuum within the engine intake manifold to be used as the reference pressure for fuel feed to the injectors at a constant pressure difference relative to the manifold. This limit is however overcome by a different method of control by the electronic controller, which controls the times for which the injectors open under the various engine operating conditions.

To achieve pressure regulation independent of the extent of clogging of the fuel filter, the pressure regulator is hydraulically connected to the downstream side of the filter, with the drawback that the filter always operates at maximum pump throughput and must therefore be dimensioned in consequence even though, in effect, a large part of this filtered fuel is immediately afterwards returned to the tank to be remixed with unfiltered fuel. Hence the same portion of liquid passes through the filter several times, so increasing its possible clogging. In this case the amount of energy which is introduced into the tank is small, and the fuel temperature in the tank does not exceed ambient temperature in practice. Moreover, harmful vapour emission is reduced by about 60% over systems with a return line.

An object of this invention is to provide an engine fuel intake and delivery unit, particularly for motor vehicles, which is integrated into a structure more versatile and less bulky than the known art for equal performance, and allows the use of a possible level indicator of tubular type, also integrated into the intake unit.

A further object of the invention is to provide a fuel intake and delivery unit which enables a high residual capacity of the stilling chamber to be achieved so that this can be used as a positive fuel reserve.

A further object of the invention is to provide a intake and delivery unit in which the fuel recirculation line and the relative Venturi ejector can be housed within the fuel filter casing.

A further object of the invention is to provide an engine fuel intake and delivery unit in which the filter casing can be easily removed and replaced without having to replace the entire feed unit, in the case of fault, malfunction or maintenance.

A further object of the invention is to provide an engine fuel intake and delivery unit which uses economical components and simple, low-cost technology.

These and further objects are attained by an engine fuel intake and delivery unit, in particular for motor vehicles, in accordance with claim 1, to which reference should be made for brevity.

The engine fuel intake and delivery unit of the invention is of the traditional returnless type. It comprises a pump associated with the fuel tank, a filter and a pressure regulator (which is sometimes mounted on the filter casing), these being connected between an entry line for the fuel originating from the pump and a fuel delivery connection to the engine injection system. The filter is constructed of small diameter compared with the current art and extends more in height rather than in width. The fact that by using this particular constructional arrangement a minimum plan outline of at least one of the components of the intake unit is obtained means that a support can be included in the unit for containing the fuel pump, the filter and possibly a fuel level indicator of tubular type.

The filter casing contains the fuel recirculation line and the relative Venturi ejector.

Further advantages and characteristics of this invention will be more apparent from the ensuing description given by way of nonlimiting example with reference to the accompanying drawings, on which:
Figure 1 is a block diagram of the hydraulic scheme of an engine fuel intake and delivery unit of the prior art;
Figure 2 is a partly sectional partial schematic view of an engine fuel intake and delivery unit of the prior art;

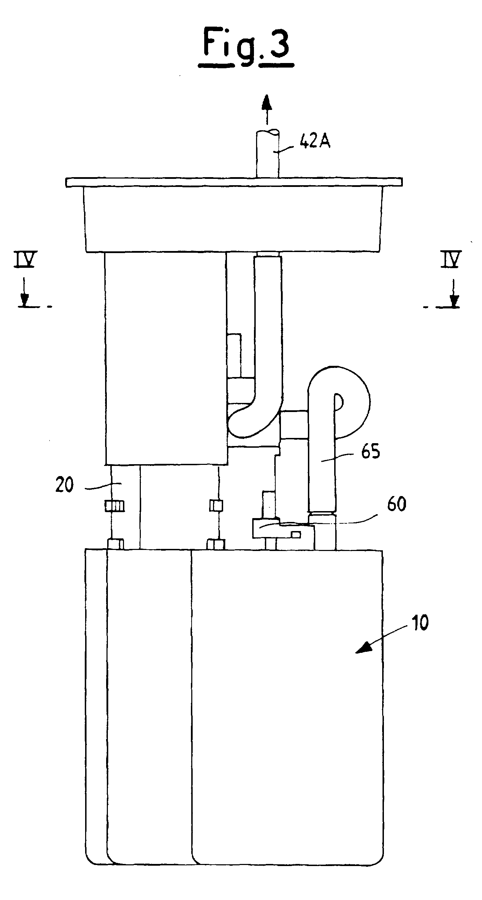

Figure 3 is a side view of a first embodiment of an engine fuel intake and delivery unit, assembled within a stilling chamber in accordance with a preferred arrangement of the hydraulic components, as described in the invention;
Figure 4 is a section on the line IV-IV of Figure 3;
Figure 5 is a section on the line V-V of Figure 4;
Figure 6 is a perspective view from below of a second embodiment of the intake and delivery unit of the invention;

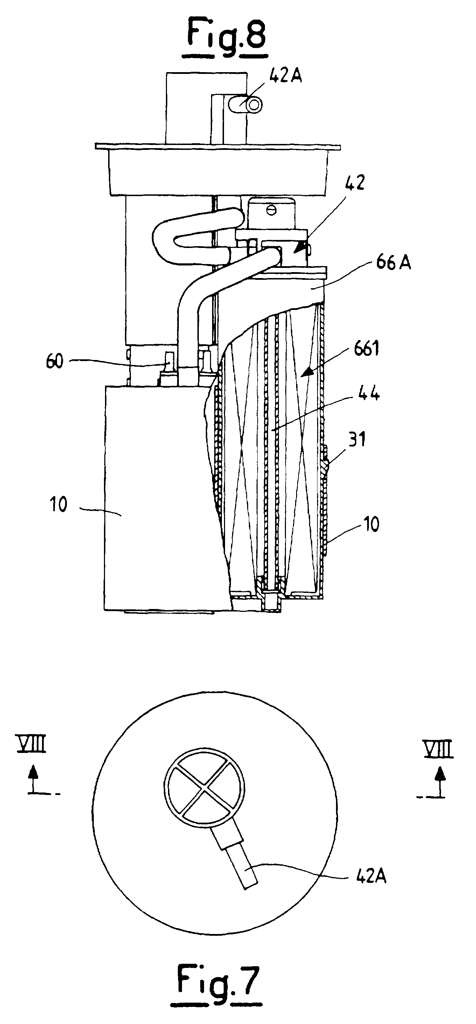

Figure 7 is a view from above of the embodiment shown in Figure 6;
Figure 8 is a view partly sectioned on the line VIII-VIII of Figure 7.

In the said figures the reference numeral 50 schematically indicates a fuel tank, 60 indicates a fuel collection and delivery pump, 60B indicates a suction filter for the pump 60, 65 indicates a feed line for the fuel leaving the pump 60 and leaving a fuel filter 66, 65A indicates an injection system for the engine 40 connected to a pressure regulator 42 via a delivery line 42A, and 44 indicates a fuel recirculation line which extends within the casing 66A of the filter 66 and terminates with a Venturi ejector 441.

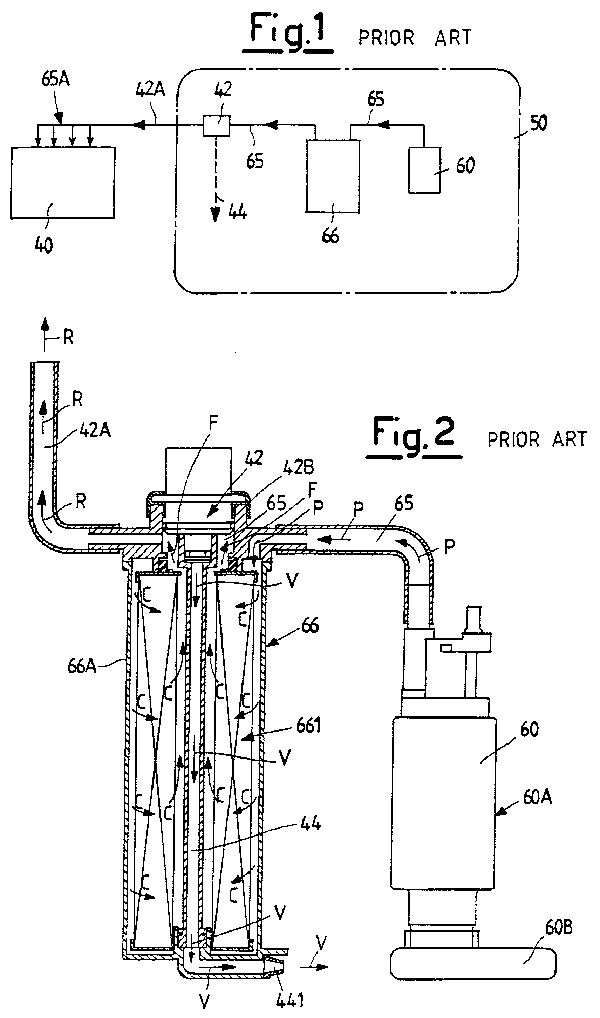

The reference numeral 661 indicates overall a filter cartridge of circular cross-section which is permeated by the fuel in following a path the direction of which is indicated by the arrows C in Figure 2, 60A indicates a support containing the pump 60, and 423 indicates a ring nut for fixing the pressure regulator 42 to the line 65 and to the fuel filter 66. The filter 66 is operationally positioned between an entry feed line 65 originating from the pump 60, and an exit line leading to the engine 40. The pressure regulator 42 receives at its inlet the fuel quantity leaving the filter 66 (the flow direction is indicated by the arrows P in Figure 2) and provides a predetermined pressure to the fuel leaving the filter 66 (in the direction of the arrows F of Figure 2) before being fed to the engine 40 along the delivery connection 42A (in the direction of the arrows R of Figure 2).

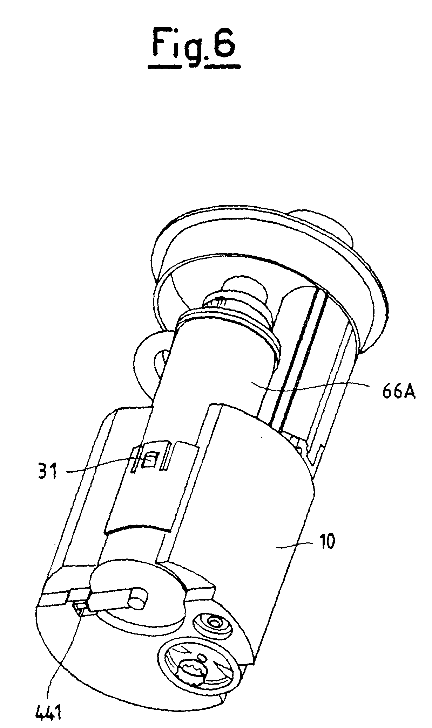

The regulator 42 enables the fuel travelling along the line 44 (in the direction of the arrows V of Figure 2) to recirculate to the tank 50 when the pressure of the fluid leaving the filter 66 is greater than or equal to the predetermined pressure. In Figure 5 the reference numeral 33 indicates the fuel level in the tank 50, whereas 32 indicates the fuel level in a stilling chamber 10 provided within the tank 50.

The stilling chamber 10 is of traditional type constructed in one piece from thermoplastic material.

The excess fuel provided by the pump 60 and recirculated to the tank 50 via the line 44 is used to maintain the stilling chamber 10 full so that, even when only a minimum fuel quantity is present in the tank 50, the quantity of fluid existing in proximity to the pump 60 is sufficient to prevent pump depriming, which could happen by the effect of the acceleration to which the vehicle is subjected during running. To achieve filling of the stilling chamber 10, the fluid recirculated through the line 44 is passed through a constriction (Venturi ejector, indicated by 441), which increases its velocity in proximity to the exit, it then being conveyed into the chamber 10 along a predetermined direction indicated by the arrows M in Figure 5.

Moreover, because of the known Venturi effect, this fuel stream leaving the ejector 441 draws further fluid from the surrounding regions of the tank 50 and conveys it into the stilling chamber 10.

The filter 66 is constructed with a diameter substantially less (and hence with a smaller plan outline) than the current art and is of greater height, so that its total volume is substantially unchanged compared with traditional constructions.

This enables the intake and delivery unit (support 60A containing the pump 60, pressure regulator 42, fuel filter 66) to be housed in a very narrow space within the stilling chamber 10, which can additionally contain a possible tubular level indicator 20.

The geometrical dimensions of the filter 66 and pressure regulator 42, this preferably being fixed on top of the filter 66 by a ring nut 42B, enable a fuel intake and delivery unit to be formed in which the stilling chamber 10 has a high residual capacity, such that it can be used as a positive fuel reserve.

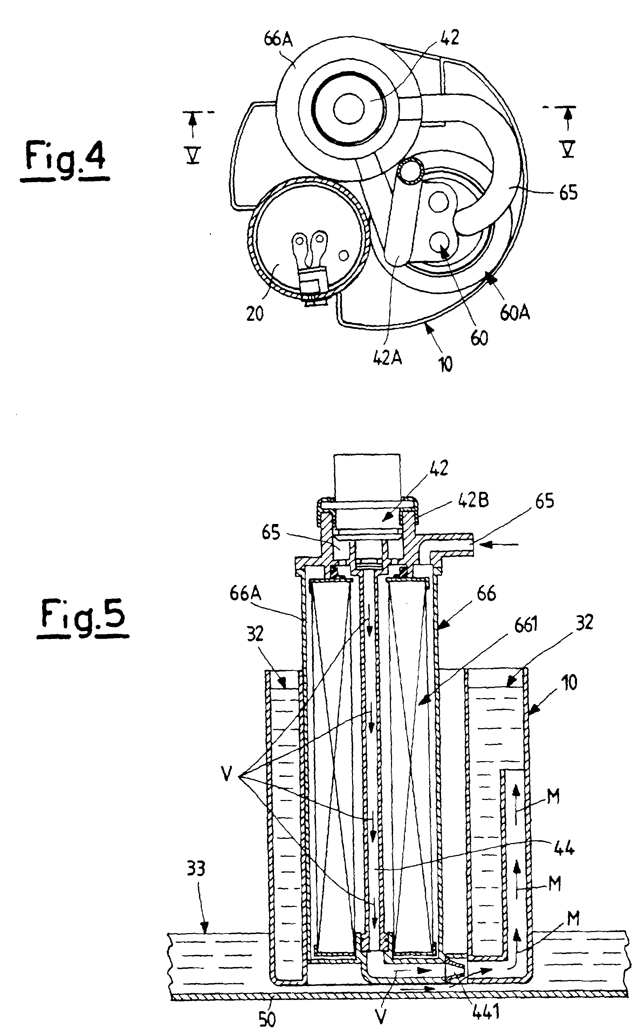

As is apparent from the schematic representation of Figure 4, the filter 66 with its casing 66A, the support 60A for the pump 60 and the level indicator 20 are positioned within the stilling chamber 10, so as to minimize the free space involved in internal cavities. For equal system performance it is hence possible to Further utilize the useful space within the stilling chamber 10 by inserting auxiliary devices therein.

In a further embodiment of the intake and delivery unit shown in detail in Figure 6, the casing 66A of the filter 66 can be easily removed and replaced (with or without the pressure regulator 42) in the case of fault, malfunction or maintenance without having to replace the entire fuel feed unit, by virtue of a bayonet coupling. By simply releasing a tooth 31, provided on the casing 66A of the filter 66, from an appropriate seat in the stilling chamber 10, the entire filter 66 can be withdrawn from the structure and be replaced or repaired before re-use.

The characteristics of the engine fuel intake and delivery unit in particular for motor vehicles, according to the invention, are apparent from the aforegoing description, as are its resultant advantages.

## Claims

1. A fuel intake and delivery unit for an engine (40), in particular for motor vehicles, comprising a tank (50), from which a pump (60) withdraws the fuel to be fed to the engine (40), at least one filter (66) which receives at its inlet, via at least one feed line (65), the fuel leaving said pump (60), at least one pressure regulator (42), fixed on the top of said filter (66) by at least one fixing ring nut (42B) and which, on the basis of a predetermined fuel reference pressure, feeds the excess fuel quantity back into the tank (50) via at least one recirculation line (44), at least one fuel level indicator (20) of tubular type and at least one delivery connection (42A), which feeds the fuel from the filter (66) to said engine, (40), said pump (60), said filter (66) and said tubular type level indicator (20) being housed within a stilling chamber (10) and said filter (66) having a circular cross-section, said pressure regulator (42), said pump (60) and said filter (66) being housed inside said fuel tank (50), whereby a support (60A), containing said pump (60), and the casing (66A) of said filter (66) have a cylindrical geometrical shape and are positioned within said stilling chamber (10) such that their lateral surfaces are mutually tangential, **characterised in that** said recirculation line (44) is integrated inside said casing (66A) of the filter (66) and terminates with a constriction consisting of an ejector device (441) of Venturi effect, which conveys the excess fuel into said stilling chamber (10).

2. A unit as claimed in claim 1, **characterised in that** said pump support (60A), said pump (60) and said filter (66), are housed within the same cavity in said stilling chamber (10).

3. A unit as claimed in claim 1, **characterised in that** said pump support (60A), said pump (60) and said filter (66) are each housed within a cavity in said stilling chamber (10).

4. A unit as claimed in claim 1, **characterised in that** said filter (66) is inserted into said stilling chamber (10) using a snap-fixing system, so that said casing (66A) can be removed and replaced without having to replace the entire fuel feed unit.

5. A unit as claimed in claim 1, **characterised in that** said filter (66) is inserted into said stilling chamber (10) using a bayonet coupling, by engaging at least one tooth (31) on said casing (66A) of the filter (66) in at least one seat of said stilling chamber (10).

6. A unit as claimed in claim 1, **characterised in that** said ejector device (441) is connected to said recirculation line (44) by a snap-fixing system.

## Patentansprüche

1. Kraftstoffeinlass- und -liefereinheit für einen Motor (40), insbesondere für Kraftfahrzeuge, umfassend einen Tank (50), aus dem eine Pumpe (60) den Kraftstoff, der dem Motor (40) zugeführt werden soll, abzieht, mindestens ein Filter (66), das an seinem Einlass über mindestens eine Zufuhrleitung (65) den Kraftstoff, der die Pumpe (60) verlässt, aufnimmt, mindestens einen Druckregler (42), der an der Oberseite des Filters (66) durch mindestens eine Befestigungsmutter (42B) befestigt ist und der auf der Grundlage eines vorbestimmten Kraftstoffreferenzdrucks die überschüssige Kraftstoffmenge in den Tank (50) über mindestens eine Rückführleitung (44) zurückführt, mindestens eine Kraftstoffstandanzeige (20) von der rohrförmigen Art und mindestens eine Lieferverbindung (42A), die den Kraftstoff von dem Filter (66) dem Motor (40) zuführt, wobei die Pumpe (60), das Filter (66) und die Kraftstoffstandanzeige (20) von der rohrförmigen Art in einem Dralltopf (10) untergebracht sind, und das Filter (66) einen kreisförmigen Querschnitt aufweist, wobei der Druckregler (42), die Pumpe (60) und das Filter (66) im Inneren des Kraftstofftanks (50) untergebracht sind, wobei ein Träger (60A), der die Pumpe (60) enthält, und das Gehäuse (66A) des Filters (66) eine zylindrische geometrische Form aufweisen und in dem Dralltopf (10) derart angeordnet sind, dass ihre Seitenflächen tangential zueinander liegen, **dadurch gekennzeichnet, dass** die Rückführleitung (44) im Inneren des Gehäuses (66A) des Filters (66) integriert ist und mit einer Engstelle endet, die aus einer Ausstoßeinrichtung (441) mit Venturi-Effekt besteht, die den überschüssigen Kraftstoff in den Dralltopf (10) befördert.

2. Einheit nach Anspruch 1, **dadurch gekennzeichnet, dass** der Pumpenträger (60A), die Pumpe (60) und das Filter (66) in dem gleichen Hohlraum in dem Dralltopf (10) angeordnet sind.

3. Einheit nach Anspruch 1, **dadurch gekennzeichnet, dass** der Pumpenträger (60A), die Pumpe (60) und das Filter (66) jeweils in einem Hohlraum in dem Dralltopf (10) untergebracht sind.

4. Einheit nach Anspruch 1, **dadurch gekennzeichnet, dass** das Filter (66) in den Dralltopf (10) unter Verwendung eines Schnappbefestigungssystems eingesetzt ist, so dass das Gehäuse (66A) entfernt und ausgetauscht werden kann, ohne die gesamte Kraftstoffzufuhreinheit austauschen zu müssen.

5. Einheit nach Anspruch 1, **dadurch gekennzeichnet, dass** das Filter (66) in den Dralltopf (10) unter Verwendung einer Bajonettkupplung eingeführt ist, indem mindestens ein Zahn (31) an dem Gehäuse (66A) des Filters (66) in mindestens einen Sitz des Dralltopfes (10) in Eingriff gebracht ist.

6. Einheit nach Anspruch 1, **dadurch gekennzeichnet, dass** die Ausstoßeinrichtung (441) mit der Rückführleitung (44) durch ein Schnappbefestigungssystem verbunden ist.

## Revendications

1. Système d'admission et de refoulement de carburant pour un moteur (40), en particulier pour des véhicules à moteur, comprenant un réservoir (50) duquel une pompe (60) extrait le carburant à fournir au moteur (40), au moins un filtre (66) qui, à son entrée, via au moins une tubulure d'alimentation (65), reçoit le carburant quittant ladite pompe (60), au moins un régulateur (42) de pression, fixé sur le dessus dudit filtre (66) par au moins une bague de fixation (42B), et qui, d'après une pression de référence prédéterminée de carburant, renvoie la quantité de carburant en excédent dans le réservoir (50) via au moins une tubulure de recirculation (44), au moins un indicateur (20) de niveau de carburant de type tubulaire et au moins un raccord de refoulement (42A), qui fait passer le carburant du filtre (66) audit moteur (40), ladite pompe (60), ledit filtre (66) et ledit indicateur (20) de niveau de type tubulaire étant logés dans une chambre de tranquillisation (10) et ledit filtre (66) ayant une section transversale circulaire, ledit régulateur (42) de pression, ladite pompe (60) et ledit filtre (66) étant logés à l'intérieur dudit réservoir (50) de carburant, grâce à quoi un support (60A), contenant ladite pompe (60), et le carter (66A) dudit filtre (66) ont une forme géométrique cylindrique et sont placés à l'intérieur de ladite chambre de tranquillisation (10) de façon que leur surfaces latérales soient mutuellement tangentielles, **caractérisé en ce que** ladite tubulure de recirculation (44) est incorporée dans ledit boîtier (66A) du filtre (66) et se termine par un étranglement constitué par un dispositif d'éjection (441) à effet Venturi, qui achemine l'excédent de carburant jusque dans ladite chambre de tranquillisation (10).

2. Système selon la revendication 1, **caractérisé en ce que** ledit support (60A) de pompe, ladite pompe (60) et ledit filtre (66) sont logés dans la même cavité dans ladite chambre de tranquillisation (10).

3. Système selon la revendication 1, **caractérisé en ce que** ledit support (60A) de pompe, ladite pompe (60) et ledit filtre (66) sont logés chacun dans une cavité de ladite chambre de tranquillisation (10).

4. Système selon la revendication 1, **caractérisé en ce que** ledit filtre (66) est inséré dans ladite chambre de tranquillisation (10) à l'aide d'un système de fixation rapide de façon que ledit boîtier (66A) puisse être retiré et remplacé sans que la totalité du système d'alimentation en carburant doive être remplacée.

5. Système selon la revendication 1, **caractérisé en ce que** ledit filtre (66) est inséré dans ladite chambre de tranquillisation (10) à l'aide d'un accouplement à baïonnette, en engageant au moins une dent (31) dudit boîtier (66A) du filtre (66) dans au moins un siège de ladite chambre de tranquillisation (10).

6. Système selon la revendication 1, **caractérisé en ce que** ledit dispositif d'éjection (441) est raccordé à ladite tubulure de recirculation (44) par un système de fixation rapide.
